# EUROPÄISCHE PATENTSCHRIFT

(11) **EP 0 311 048 B1**
(45) Veröffentlichungstag und Bekanntmachung des Hinweises auf die Patenterteilung: **10.03.1993**
(21) Anmeldenummer: 88116491.7
(22) Anmeldetag: 05.10.1988
(51) Int. Cl.: B60L 5/28

(54) **Halbscherenstromabnehmer mit Einrichtung zur Verhinderung mechanischer Überlastung**
Single-arm pantograph with device for prevention of mechanical overload
Pantographe à bras unique avec dispositif pour empêcher une surcharge mécanique

(30) Priorität: 08.10.1987 AT 2569/87
(43) Veröffentlichungstag der Anmeldung: 12.04.1989
(73) Patentinhaber: Siemens Aktiengesellschaft Österreich, 1210 Wien (AT); SIEMENS AKTIENGESELLSCHAFT, 80333 München (DE)
(72) Erfinder: Koch, Günter, A-1060 Wien (AT); Katzer, Günter, Dipl.-Ing., D-8523 Baiersdorf (DE)

(56) Entgegenhaltungen:
- AT-B- 168 702
- AT-B- 297 798
- CH-A- 111 067
- CH-A- 128 108
- CH-A- 495 860

## Beschreibung

Gegenstand der Erfindung ist ein Halbscherenstromabnehmer mit Einrichtung zur Verhinderung mechanischer Überlastung, bei dem das untere Gelenk der Kuppelstange an einem Hebel angeordnet ist, der am Grundrahmen des Stromabnehmers schwenkbar gelagert und mittels eines Bruchbolzens gegen Verschwenkung unter den im normalen Betrieb auftretenden Krafteinwirkungen verriegelt ist.

In der Patentschrift CH-A-495 860 ist ein Scherenstromabnehmer für elektrisch betriebene Eisenbahnfahrzeuge angegeben, bei welchem obere bewegliche Rahmen mit unteren beweglichen Rahmen gelenkig verbunden sind über ein System von Hebeln, welche durch einen Druckluftantrieb betätigt werden. Für das Heben und Senken des Systems von Hebeln sorgt der Druckluftantrieb, welcher einen Druckluftzylinder und eine Steuereinrichtung aufweist. Bei Normalbetrieb, insbesondere bei einer großen Höhenminderung der Fahrleitung, ist es vorgesehen, daß infolge des Austritts von Druckluft aus dem Druckluftzylinder durch die Steuereinrichtung in die Atmosphäre das System von Hebeln gesenkt wird. Bei nachfolgend ansteigender Höhe der Fahrleitung verschieben sich die beweglichen Rahmen, und über Zugstangen wird eine Verschiebung des Kolbens der Steuereinrichtung bewirkt, sodaß wieder Druckluft in den Druckluftzylinder gelangt, und das System von Hebeln sich hebt.

Beim Zusammenstoß des Scherenstromabnehmers mit Hindernissen an der Fahrleitung, also bei Notbetrieb ist in einem Fall eine Zerstörung von einer synchronisierenden Zugstange vorgesehen, wobei der Kolben der Steuereinrichtung über die Zugstangen so verschoben wird, daß die Druckluft aus dem Druckluftzylinder über die Steuereinrichtung in die Atmosphäre entweicht, wodurch das System von Hebeln sich senkt.

In einem anderen Fall, insbesondere bei einer Bewegung in der anderen Fahrtrichtung und einem Zusammenstoß mit einem Hindernis, ist ebenso die Zerstörung der synchronisierenden Zugstange vorgesehen. In diesem Fall ist entscheidend, daß die Festigkeit einer flexiblen Zugstange größer ist als die Festigkeit einer weiteren sich dabei zerstörenden Zugstange. Anstelle dieser sich zerstörenden Zugstange kann auch vorgesehen sein, daß ein mit dieser Zugstange verbundener Gelenkfinger abgeschert wird bei dieser Anspannung der flexiblen Zugstange. Jedenfalls soll über Zugstangen der Kolben der Steuereinrichtung so verschoben werden, daß Druckluft aus dem Druckluftzylinder über die Steuereinrichtung in die Atmosphäre entweicht, wodurch das System von Hebeln sich senkt.

Für eine bequeme Montage soll dieses System von Hebeln auf einer beweglichen Grundplatte angeordnet sein. Anstelle der beweglichen Grundplatte können auch bestimmte Wellen bei diesem System von Hebeln in verschwenkbaren Lagern montiert sein.

In der Patentschrift CH-A-128 108 ist eine Schnellsenkvorrichtung für elektrische Stromabnehmer angegeben, bei welchem zwecks Einleitung einer plötzlichen Senkung des Stromabnehmers die Ausbiegung mindestens eines Organes erfolgt, welches in gewöhnlichem Zustand wenigstens angenähert eine Gerade bildet. Im Gegensatz zu anderen Schnellsenkvorrichtungen soll dieses Sicherungsglied beim Veranlassen der Schnellsenkung weder zerstört und auch nicht durchbrochen werden. Danach soll insbesondere vom Führerstand des Fahrzeuges aus der Stromabnehmer wieder angehoben werden können. Damit das Anheben des niedergegangenen Stromabnehmers sanft erfolgt, ist vor dem Druckzylinder ein Drosselventil angeordnet.

Bei einem in die Bahn der Wippe des Stromabnehmers hineinreichenden Hindernis wird das Biegeglied eingeknickt, sodaß ein Auslösehebel umgekippt wird, wodurch sich ein Winkelhebel umlegen kann, von welchem dabei ein Ausströmventil betätigt wird, sodaß Luft aus dem Druckzylinder ausströmt. Dabei ist vorgesehen, daß durch das Drosselventil ständig neue Luft in den Druckzylinder nachströmt und aus diesem über das Ausströmventil wieder entweicht. Dabei wird von der Druckluft aus der Druckluftzuleitung vor dem Drosselventil ein Rückstellkolben in einem Rückstellzylinder so gehalten, daß der Winkelhebel in seiner umgelegten Position verbleiben kann.

Stromabnehmer mit Sollbruchstelle, die bei einer auf den Stromabnehmer übertragenen übermäßigen Kraft ein Entspannen der Hubfeder und damit ein Absenken des Scherengestänges bewirkt, sind, etwa durch die AT-PS 168.702 sowie die AT-PS 297.798 bekannt. Bei letzterer ist z.B. bei einem herkömmlichen Halbscherenstromabnehmer an dem aus Rohren aufgebauten Grundrahmen ein Kniehebel gelagert, an dessen kurzem Hebelarm die Kuppelstange gelenkig gelagert ist und dessen langer Hebelarm am freien Ende eine Rolle trägt und mittels eines Bruchbolzens in seiner Lage fixiert ist. Eine am Grundrahmen gelagerte Schwinge stützt sich an einem Ende an der Rolle des Kniehebels ab und ist am anderen Ende mit der Hubfeder verbunden. Wenn auf die Palette des Stromabnehmers eine übermäßig große Kraft einwirkt, wird diese über den Oberarm und die Kuppelstange auf den Kniehebel übertragen und bewirkt das Abscheren des Bruchbolzens. Der Kniehebel wird verschwenkt, seine Rolle kommt mit der Schwinge außer Eingriff und die Schwinge wird gedreht, wodurch die Hubfeder schlagartig entspannt und der Stromabnehmer durch sein Eigengewicht zusammengeklappt wird. Bei dieser mechanischen Auslösung bzw. Entspannung einer oder mehrerer der Hubfedern am Stromabnehmer durch einen Hebelmechanismus besteht der Nachteil, daß die in der Hubfeder gespeicherte Energie schlagartig freigesetzt wird. Dadurch besteht Verletzungsgefahr bei Montage und Wartung, die Rückstellung der Sicherheitseinrichtung ist schwierig.

Ein erfindungsgemäßer Halbscherenstromabnehmer mit Einrichtung zur Verhinderung mechanischer Überlastung weist diesen Nachteil nicht auf. Er ist dadurch gekennzeichnet, daß sich der Hebel in seiner verriegelten Stellung mit einem öffenbaren Verschlußorgan für das stromabnehmerseitige erste Ende einer Druckleitung in einer, dessen Sperrstellung bewirkenden oder aufrechterhaltenden mechanischen Wirkverbindung befindet, daß das zweite Ende der Druckleitung an den Steueranschluß eines Vorsteuerventils für den Senkzylinder des Stromabnehmers angeschlossen ist und die Druckleitung über ein Drosselventil an den Hauptluftanschluß angeschlossen ist.

Der Vorteil dieser Anordnung liegt darin, daß nicht die Hubfeder schlagartig aus dem im Stromabnehmer wirkenden Kräftesystem ausgekoppelt wird, wobei zur Wiederherstellung des Betriebszustandes deren Wiedereinkopplung unter beträchtlichem Kraftaufwand erforderlich ist, sondern daß eine normal verlaufende Absenkung des Stromabnehmers ausgelöst wird.

Ein Ausführungsbeispiel soll nachfolgend anhand einer Zeichnung näher beschrieben werden.

Die Fig. zeigt - in den gängigen Details schematisiert - einen Halbscherenstromabnehmer. Am Grundrahmen 1 ist in Basislagern 2 der Unterarm 3 des Stromabnehmergestells gelagert. Kuppelstange 4 und Unterarm 3 sind in bekannter Weise an einen gemeinsamen Oberarm 5 angelenkt, in dessen Scheitelgelenk 6 eine Wippe 7 mit Schleifleisten 8 freibeweglich gelagert ist. Ein den Unterarm 3 verlängernder Anlenkhebel 9 dient als Hebelarm für den Angriff der Hubfeder 10, die mit einem Ende 11 am Grundrahmen 1 eingespannt ist.

Über einen Hebel 12, dessen Ende in einer Schlaufe 13 geführt ist, kommt der Stromabnehmer beim Absenken in mechanische Wirkverbindung mit der Absenkeinrichtung, die in bekannter Weise aus einem Senkzylinder 14 mit Rückholfeder 15 und Druckkolben 16 besteht, deren Betätigung mit Druckluft über ein Schnellentlüftungsventil 17 erfolgt. Ein in die Kolbenstange 18 eingefügter Zugisolator 19 dient zur Potentialtrennung zwischen den am Dach 20 der Lokomotive angeordneten und den zum, mittels Isolatoren 37 am Dach 20 befestigten, Stromabnehmer gehörenden Elementen.

Das untere Gelenk der Kuppelstange 4 ist an einem Arm 21 eines Hebels 22, hier eines Winkelhebels, angeordnet. Dieser Hebel 22 ist mittels einer horizontal und quer zur Fahrtrichtung angeordeten Schwenkachse 23 am Grundrahmen 1 gelagert. In bekannter Weise ist der Hebel 22 am Ende seines anderen Armes 24 unter Zwischenschaltung eines Bruchbolzens 25 gegen den Grundrahmen 1 abgestützt und ist dadurch gegen Verschwenkung durch die von der Kuppelstange 4 ausgeübte Kraft gesichert, insoweit diese die im normalen Betrieb vorhersehbar auftretenden Kräfte, für die der Bruchbolzen 25 dimensioniert ist, nicht überschreitet.

In seiner abgestützten oder unverschwenkten Stellung ist der Hebel 22 in mechanischer Wirkverbindung mit einem Verschlußorgan 26 zum druckdichten lösbaren Verschließen des ersten Endes 27 einer Druckleitung 28. Stellvertretend für alle hierzu vorstellbaren Ausführungsformen sei eine Anordnung mit einem herkömmlichen Ventil beschrieben. Mittels eines fingerförmigen Elements 29 wirkt der Hebel 22 auf das Betätigungselement 30 des Ventils 26 und hält dieses gegen Federdruck in Sperrstellung. Das zweite Ende 31 der wenigstens teilweise aus elektrisch isolierendem Material bestehenden Druckleitung 28 ist an den Steueranschluß eines Vorsteuerventils 32 angeschlossen, das in die zum Senkzylinder 14 führende Druckluftleitung 33 eingefügt ist. Über ein, vorteilhaft verstellbares Drosselventil 34 ist die Druckleitung 28 an den Hauptluftanschluß 36 angeschlossen.

Wenn zum Anheben des Stromabnehmers die Druckluftleitung 33 über ein hier nicht gezeigtes Hauptsteuerventil an den Betriebsdruck gelegt wird, strömt Druckluft über das Drosselventil 34 in die am ersten Ende 27 verschlossene Druckleitung 28 und baut in dieser einen Druck auf. Wenn dieser den Betätigungsdruck des Vorsteuerventils 32 erreicht, wird dieses aus der Sperrstellung in die Durchflußstellung umgesteuert und läßt Druckluft in den Senkzylinder 14 einströmen. Der Druckkolben 16 mitsamt der Kolbenstange 18 wird entgegen der Kraft der Rückholfeder 15 in die gezeichnete Arbeitsstellung gebracht. In dieser gestattet der Senkantrieb eine völlig unbehinderte Vertikalbewegung der durch die Kraft der Hubfeder 10 mit der Kontaktkraft F_{K} an den Fahrdraht 35 angedrückten Wippe 7 um eine Mittellage.

Während der Fahrt entsteht durch den Einfluß der Reibung zwischen Schleifleisten 8 und Fahrdraht 35 sowie des Windes oder von Beschleunigungskräften eine Horizontalkraft F_{B} schwankender Größe, die jedoch im ungestörten Normalbetrieb vorhersehbar einen zulässigen Höchstwert nicht überschreitet, für den der Stromabnehmer mit einem vorgeschriebenen Sicherheitsfaktor mechanisch dimensioniert ist. Aus erfahrungsgemäß nicht auszuschließenden Ursachen können Störfälle auftreten, bei denen es zu einer betrieblichen Überschreitung dieser zulässigen, für den Stromabnehmer noch ungefährlichen Horizontalkraft kommt, sodaß Beschädigungen des Stromabnehmers und unter Umständen auch des Fahrdrahtsystems eintreten können. In einem derartigen Störfall tritt auch in der Kuppelstange 4 eine übermäßig große Zug- oder Druckkraft auf, die auf den Hebel 22 übertragen wird. Wird die Kraft so groß, daß der Hebel 22 den Bruchbolzen 25 abschert, wird der Hebel 22 nach der einen bzw. anderen Richtung verschwenkt. Dabei wird die mechanische Wirkverbindung zwischen Hebel 22 und Verschlußorgan 26 aufgehoben d.h., das Verschlußorgan 26 gibt durch Federkraft oder durch die Wirkung des in der Druckleitung 28 herrschenden Luftdruckes die Austrittsöffnung des stromabnehmerseitigen ersten Endes 27 der Druckleitung 28 frei und entlüftet so diese Druckleitung 28 ins Freie. Infolge des Druckabfalles in der Druckleitung 28 wird das von dieser angesteuerte Vorsteuerventil 32 in die Grundstellung umgesteuert und entlüftet den Senkzylinder 14 sodaß durch die Kraft der Rückholfeder 15, Druckkolben 16 und Kolbenstange 18 im Rückhub bewegt werden, das Ende des Hebels 12 mit dem Ende der Schlaufe 13 in Eingriff kommt und der Stromabnehmer rasch abgesenkt wird. Das Drosselventil 34 vermindert die bis zum Abschalten der Druckluftzufuhr entweichende Luftmenge und verringert dadurch auch den zufolge des Strömungswiderstandes in der Druckleitung 28 entstehenden, vom Luftdurchsatz abhängigen Gegendruck, der den im Störfall entscheidenden raschen Druckabfall am Steueranschluß des Vorsteuerventils 32 verringern und verzögern könnte.

Nach dem Störfall kann im abgesenken Zustand des Stromabnehmers ohne großen Kraftaufwand ein neuer Bruchbolzen 25 eingesetzt werden, wobei natürlich auf die Wiederherstellung des richtigen Zustandes des Verschlußorgans 26 zu achten ist, der bis zum nächsten Störfall durch den, wieder in abgestützte Stellung gebrachten Hebel 22 gewährleistet ist. Der Stromabnehmer ist wieder betriebsbereit.

Hier zeigt sich deutlich der große Vorteil gegenüber mancher der im Stand der Technik bekannten Einrichtungen, bei denen zum Einsetzen eines neuen Bruchbolzens die Hubfeder auf eine Länge gedehnt werden muß, die gerade im abgesenkten Zustand des Stromabnehmers am größten ist.

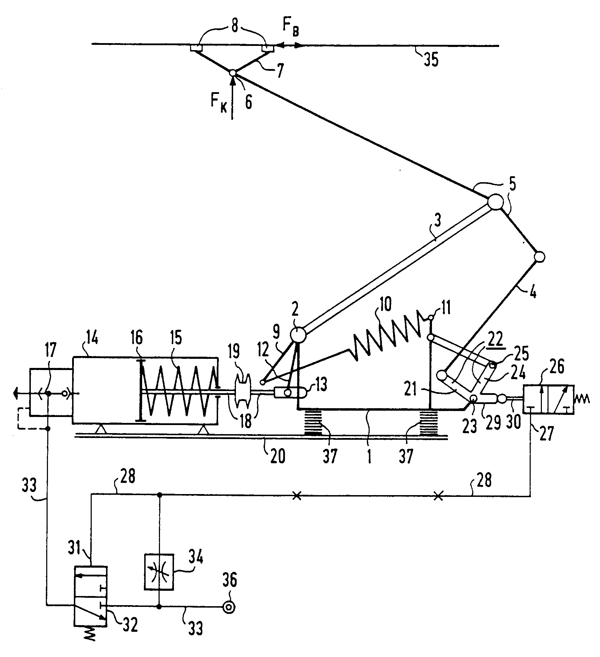

## Patentansprüche

1. Halbscherenstromabnehmer mit Einrichtung zur Verhinderung mechanischer Überlastungen,
- bei welchem ein unteres Gelenk einer Kuppelstange (4) an einem Hebel (22) angeordnet ist,
- bei welchem der Hebel (22) an einem Grundrahmen des Stromabnehmers schwenkbar gelagert ist,
- bei welchem der Hebel (22) mittels eines Bruchbolzens (25) gegen Verschwenkung unter im normalen Betrieb auftretenden Krafteinwirkungen verriegelt ist,
- bei welchem sich der Hebel (22) in seiner verriegelten Stellung mit einem öffenbaren Verschlußorgan (26) für ein stromabnehmerseitiges erstes Ende (27) einer Druckleitung (28) in einer, dessen Sperrstellung bewirkenden oder aufrechterhaltenden mechanischen Wirkverbindung befindet,
- bei welchem ein zweites Ende (31) der Druckleitung (28) an einen Steueranschluß eines Vorsteuerventils (32) für einen Senkzylinder (14) des Stromabnehmers angeschlossen ist
- bei welchem die Druckleitung (28) über ein Drosselventil (34) an einen Hauptluftanschluß (36) angeschlossen ist.

## Claims

1. Single-arm pantograph with device for preventing mechanical overloads,
- where a lower joint of a coupling rod (4) is arranged on a lever (22),
- where the lever (22) is pivotally mounted on a base frame of the pantograph,
- where the lever (22) is locked by means of a fracture bolt (25) against pivoting under the effects of forces occurring in normal operation,
- where the lever (22) is located in its locked position with an openable closure element (26) for a pantograph-side first end (27) of a pressure line (28) in a mechanical operative connection effecting or maintaining its blocking position,
- where a second end (31) of the pressure line (28) is attached to a control connection of a pilot valve (32) for a lowering cylinder (14) of the pantograph,
- where the pressure line (28) is attached by way of a throttle valve (34) to a main air connection (36).

## Revendications

1. Pantographe à un seul bras à agencement pour empêcher des surcharges mécaniques, dans lequel
- une articulation inférieure d'une barre de couplage (4) est montée sur un levier (22),
- le levier (22) est monté à articulation sur un cadre de base du pantographe,
- le levier (22) est verrouillé au moyen d'un boulon de sureté (25) contre un basculement sous l'effet de forces pouvant apparaître pendant le fonctionnement normal,
- le levier (22) est, dans sa position verrouillée, raccordé à un organe de fermeture (26), qui peut être ouvert, pour une première extrémité (27) d'une conduite de pression (28) située côté du pantographe, selon une liaison mécanique amenant le levier dans la position de blocage ou l'y maintenant,
- une seconde extrémité (31) de la conduite de pression (28) est reliée à un raccord de commande d'une vanne de commande pilote (32) pour un vérin abaisseur (14) du pantographe, et
- la conduite de pression (28) est raccordée par l'intermédiaire d'une vanne d'étranglement (34) à un raccord d'air principal (36).
